## Europäisches Patentamt
## European Patent Office
## Office européen des brevets

(19)

(11) Veröffentlichungsnummer: **0 140 087**
**B1**

(12)
# EUROPÄISCHE PATENTSCHRIFT

(45) Veröffentlichungstag der Patentschrift:
13.01.88

(51) Int. Cl.⁴: **H 04 L 25/40**

(21) Anmeldenummer: 84110827.7

(22) Anmeldetag: 11.09.84

(54) Bitserielle, asynchrone Übertragungsstrecke für hohe Datenraten.

(30) Priorität: 29.09.83 DE 3335397

(43) Veröffentlichungstag der Anmeldung:
08.05.85 Patentblatt 85/19

(45) Bekanntmachung des Hinweises auf die Patenterteilung:
13.01.88 Patentblatt 88/2

(84) Benannte Vertragsstaaten:
AT DE FR GB IT

(56) Entgegenhaltungen:
US-A-3 310 626
US-A-3 946 379

NUCLEAR INSTRUMENTS & METHODS, Band 171,
Nr. 2, April 1980, Seiten 275-279, North-Holland
Publishing Company, Amsterdam, NL; A. LOVETT
et al.: "A low cost, high rate, single communication
channel at the solis"
ELECTRONIC COMPONENTS AND APPLICATIONS,
Band 5, Nr. 2, Februar 1983, Seiten 100-107,
Eindhoven, NL; J. EXALTO: "Fast and undistorted
data transfer in noisy environments"
EDN, Band 24, Nr. 2, 20. Januar 1979, Seiten 92-94,
Boston, USA; T. BALPH: "Drive 50omega
transmission lines with TTL or ECL gate outputs"
(73) Patentinhaber: Siemens Aktiengesellschaft Berlin
und München, Wittelsbacherplatz 2, D-8000
München 2 (DE)

(72) Erfinder: Thinschmidt, Hans, Dipl.- Ing.,
Kreuzlingerstrasse 52c, D-8034 Germering (DE)
Erfinder: Stock, Peter, Dipl.- Ing., Neubiberger
Strasse 65, D-8000 München 65 (DE)
Erfinder: Wahr, Alfons- Josef, Dipl.- Inf., Pucher
Strasse 52, D-8060 Fürstenfeldbruck (DE)
Erfinder: Breintner, Richard, Dipl.- Inf., Isenstrasse
23, D-8261 Ampfing (DE)

## Beschreibung

Bitserielle, asynchrone Übertragungsstrecke für hohe Datenraten

Die vorliegende Erfindung betrifft eine bitserielle, asynchrone Übertragungsstrecke für hohe Datenraten zum Zwecke einer paketorientierten Datenübertragung zwischen einer Datenquelle und einer Datensenke, vorzugsweise einem Rechner, mit einer Sendeeinrichtung und einer Empfangseinrichtung, bei der in der Sendeeinrichtung ein Parallel/Seriell-Umsetzer und in der Empfangseinrichtung ein Seriell/Parallel-Umsetzer vorgesehen ist.

Übertragungsstrecken mit Datenraten über 1-2 Mbit/s werden bisher mit synchronen Prozeduren betrieben, da die bei asynchronen Prozeduren notwendigen hohen Abtastfrequenzen (16 x bzw. 64 x die Übertragungsfrequenz) in herkömmlichen Empfängerschaltungen für TTL-Bausteine eine technologische Barriere darstellen.

Aus der Druckschrift NUCLEAR INSTRUMENTS & METHODS, Band 171, Nr. 2, April 1980, Seiten 275-79; A. LoVETT et al: "A low cost, high rate, single communication channel at the solis" ist bereits eine Anordnung für eine bitserielle, asynchrone Übertragungsstrecke für hohe Datenraten zum Zwecke einer Datenübertragung zwischen einer Datenquelle (SOLIS) und einer Datensenke (Rechner) bekannt. Dabei enthalten sowohl die Sendeeinrichtung als auch die Empfängereinrichtung UART-Bausteine (Universal asynchronous receiver-transmitter), wobei in der Sendeeinrichtung eine Parallel-Seriell-Umsetzung und in der Empfängereinrichtung eine Seriell-Parallel-Umsetzung vorgenommen wird.

Außerdem sind in dieser bekannten Anordnung auch quarzgesteuerte Sender- und Empfänger-Oszillatoren vorgesehen, die die Seriell/Parallel- bzw. Parallel/Seriell-Umsetzer takten.

Der vorliegenden Erfindung liegt die Aufgabe zugrunde, eine bitserielle, asynchrone Übertragungsstrecke für hohe Datenraten zum Zwecke einer paketorientierten Datenübertragung der eingangs genannten Art zu schaffen, die mit üblichen TTL-Schaltkreisen realisiert werden kann und für Übertragungsraten bis zu etwa 40 Mbit/s einsetzbar ist.

Die der Erfindung zugrundeliegende Aufgabe wird durch eine bitserielle, asynchrone Übertragungsstrecke gemäß dem Oberbegriff des Patentanspruchs 1 gelöst, die durch die in dem kennzeichnenden Teil des Patentanspruchs 1 angegebenen Merkmale charakterisiert ist.

Vorteilhafte Weiterbildungen sind durch die in den Unteransprüchen angegebenen Merkmale gekennzeichnet.

Im folgenden wird die vorliegende Erfindung anhand mehrerar, bevorzugter Ausführungsbeispiele für die Erfindung betreffender Figuren im einzelnen beschrieben.

Fig.1 zeigt ein Blockschaltbild der erfindungsgemäßen bitseriellen, asynchronen Übertragungsstrecke.

Fig.2 zeigt ein Impuls/Zeitdiagramm für eine asynchrone Abtastung von Datensignalimpulsen.

Fig.3 zeigt das Prinzipschaltbild eines Empfänger-Oszillators, wie er in der Übertragungsstrecke gemäß Fig.1 zur Anwendung kommt.

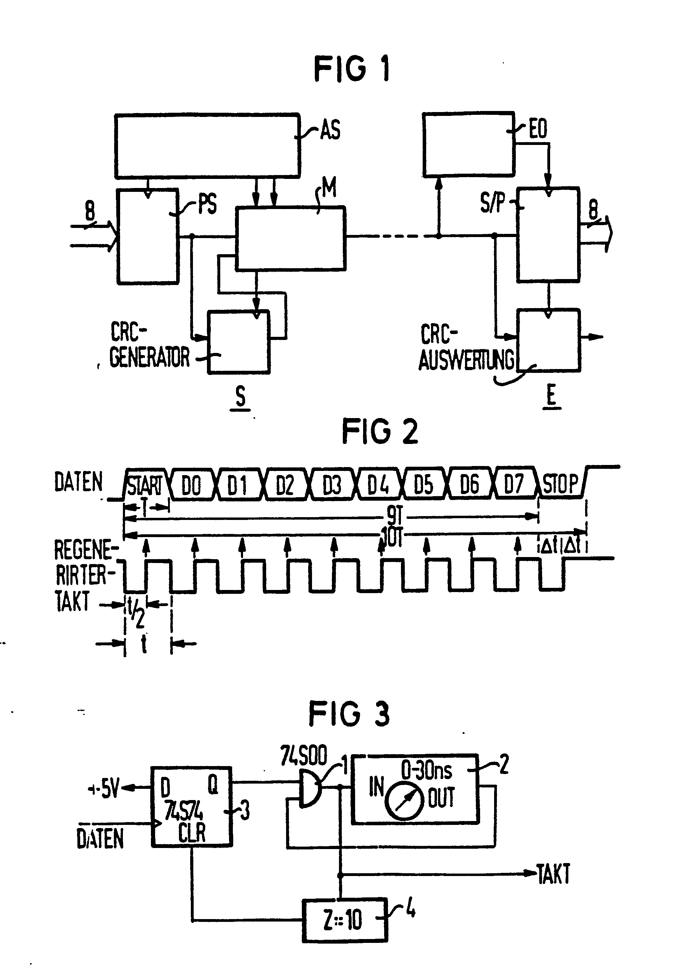

Die vorgeschlagene asynchrone Übertragungsstrecke besteht im wesentlichen aus einer Sender- und einer Empfängerschaltung, die beide mit Schottky-TTL-Bausteinen realisierbar sind. Zur Erkennung von Übertragungsfehlern wird, wie in synchronen Prozeduren üblich, ein CRC-Prüfpolynom (Cyclic Redundancy Check) am Ende eines Pakets gesendet und in der Empfängerschaltung ausgewertet (Fig.1). Aus diesem Grunde wurde zur Vereinfachung auf das bei asynchronen Prozeduren übliche Paritybit zur Datensicherung verzichtet.

Es wird von einem 8-Bit parallelen Datenbus als Rechnerschnittstelle ausgegangen. Die asynchrone Zeichenformatierung (Startbit, 8 Datenbits, Stopbit) wird nach der Parallel-Seriell-Wandlung PS in einem Multiplexer M realisiert, der von einer quarzstabilen Ablaufsteuerung AS getaktet wird. Diese Ablaufsteuerung AS generiert zudem alle für eine Blockübertragung notwendigen Sequenzen (Framing). Das CRC-16-Prüfpolynom wird dabei am Blockende wie Datenbytes in Form zweier asynchrone Zichen übertragen, wobei die Generierung des Polynoms über die unformatierten Daten erfolgt. Die bei asynchronen Prozeduren mögliche beliebig lange Stoppolarität wird aus Effektivitätsgründan auf 1 Bit beschränkt.

Gegenüber synchronen Übertragungsverfahren, wie z. B. der "Manchester-Codierung", ergibt die vorgeschlagene Übertragungsprozedur bei gleichen Netto-Datenübertragungsraten einen wesentlich geringeren Bandbreitenbedarf.

Im Gegensatz zu synchronen Prozeduren wird auf eine bitsynchrone Taktrückgewinnung verzichtet. Kernstück der Empfängerschaltung ist ein einfacher Oszillator EO, der mit jedem Startbit eines empfangenen Zeichens gestartet wird und innerhalb einer Zeichenlänge hinreichend genau die Abtastfrequenz realisiert. Die theoretisch maximal mögliche Abweichung $\Delta T$ vom idealen Abtastzeitpunkt des letzten Bits (Stopbit) eines Zeichens darf $+ T/2$ der Bitdauer $T$ betragen. Aus (*) ergibt sich für den Empfangsoszillator EO eine zulässige Abweichung von $\Delta t = 1/19\, T$, entsprechend $\Delta f$, 5,2 % Abweichung von der Sendefrequenz.

(*) $9T\,(9t + t/2) < 10T$     (vergl. Fig. 2).

Der Oszillator EO (Fig.3) besteht im wesentlichen aus einem rückgekoppelten Inverter (NAND-Gatter) 1, wobei die Frequenz an einem variablen Laufzeitglied 2 einstellbar ist. Ein Flip-Flop 3 zur Startflankenerkennung startet den Oszillator und wird am Zeichenende mit Hilfe eines Zählers 4 wieder zurückgesetzt.

Die CRC-Auswertung im Empfänger erfolgt ebenfalls nur über die zurückgewonnenen Netto-Datenbits (ohne Start- und Stopbit). Zähler 4 für Z = 10 ist mit einem Zähleingang mit dem Signalausgang des Verknüpfungsgliedes verbunc.en und dessen Zählausgang ist mit dem Rücksetzanschluß eines Startflanken-Erfassungsgliedes 3 verbunden.

**Patentansprüche**

1. Bitserielle asynchrone Übertragungsstrecke für hohe Datenraten bis zu etwa 40 Mbit/s zum Zwecke einer paketorientierten Datenübertragung zwischen einer Datenquelle und einer Datensenke, vorzugsweise jeweils einem Rechner, mit einer Sendeeinrichtung (S) und einer Empfangseinrichtung (E), bei der in der Sendeeinrichtung ein Parallel/Seriell-Umsetzer (PS) und in der Empfangseinrichtung ein Seriell/Parallel-Umsetzer (S/P) vorgesehen ist, mit einer senderseitigen quarzstabilen Ablaufsteuerung (AS), dadurch gekennzeichnet, daß in der Sendeeinrichtung (S) ein Multiplexer (M) vorgesehen ist, der von der quarzstabilen Ablaufsteuerung (AS) getaktet wird und die erforderliche asynchrone Zeichenformatierung nach der Parallel/Seriell-Umsetzung zu übertragender Datensignale durchführt, daß die Ablaufsteuerung (AS) alle für eine Blockübertragung erforderlichen Sequenzen erzeugt, daß in der Empfangseinrichtung (E) zusätzlich zu dem Seriell/Parallel-Umsetzer (S/P) ein Empfänger-Oszillator (EO) vorgesehen ist, der den Seriell/Parallel-Umsetzer (S/P) taktet, daß zur Erkennung von Übertragungsfehlern ein sogenanntes CRC-(Cyclic Redundancy Check)-Prüfpolynom am Ende eines jeweils gesendeten Pakets zu der Empfangseinrichtung (E) übertragen wird, in der es ausgewertet wird, daß das CRC-Prüfpolynom am Ende eines Blocks wie Datenbytes in Form zweier asynchroner Zeichen übertragen wird und daß die Generierung des CRC-Prüfpolynoms über die noch nicht formatierten Daten erfolgt.

2. Bitserielle, asynchrone Übertragungsstrecke nach Anspruch 1, dadurch gekennzeichnet, daß der Empfänger-Oszillator (EO) aus einem rückgekoppelten Verknüpfungsglied, vorzugsweise einem NAND-Glied, (1) besteht, wobei zum Zwecke der Rückkopplung des Ausgangssignals des Verknüpfungsglieds auf einen von mehreren Signaleingängen desselben ein Verzögerungsglied (2) zwischen den Signalausgang des Verknüpfungsglieds und den betreffenden Signaleingang geschaltet ist, daß der Empfängeroszillator (EO) im Bedarfsanlaßbetrieb arbeitet, wozu einem ersten Signaleingang des Verknüpfungsglieds ein Startflanken-Erfassungsglied (3), vorzugsweise in Form eines D-Flip-Flops, vorgeschaltet ist, dem als Eingangssignal ein eintreffender Datensignalimpuls zugeführt wird und, daß ein Zähler (4) für Z = 10 vorgesehen ist, dessen Zähleingang mit dem Signalausgang des Verknüpfungsglieds und dessen Zählausgang mit dem Rücksetzanschluß des Startflanken-Erfassungsglieds (3) verbunden ist.

3. Bitserielle, asynchrone Übertragungsstrecke nach Anspruch 2, dadurch gekennzeichnet, daß die Verzögerungszeit des Verzögerungsglieds (2) verstellbar ist.

4. Bitserielle, asynchrone Übertragungsstrecke nach einem der Ansprüche 1 bis 3, dadurch gekennzeichnet, daß die Schaltungselemente in der Sendeeinrichtung (S) und der Empfangseinrichtung (E) zumindest zum Teil in TTL-Schaltkreistechnik realisiert sind.

5. Bitserielle, asynchrone Übertragungsstrecke nach einem der Ansprüche 1 bis 3, dadurch gekennzeichnet, daß die Schaltungselemente der Sendeeinrichtung (S) und der Empfangseinrichtung (E) zumindest zum Teil in Schottky-TTL-Schaltkreistechnik realisiert sind.

**Claims**

1. A bit-serial, asynchronous transmission link for high data rates of up to approximately 40 Mbit/s for packet-oriented data transmission between a data source and a data sink, preferably in each case a computer, with a transmitting device (S) and a receiving device (E), where a parallel/series-converter (PS) is arranged in the transmitting device and a series/parallel-converter (SP) is arranged in the receiving device, with a transmitter-end quartz-stable flow control unit (AS), characterised in that in the transmitting device (S) is arranged a multiplexer (M) which is clock-controlled by the quartz-stable flow control unit (AS) and which carries out the requisite asynchronous character formatting following the parallel/series conversion of data signals which are to be transmitted, that the flow control unit (AS) generates all the sequences necessary for block transmission, that in addition to the series/parallel-converter (S/P) the receiving device (E) includes a receiver-oscillator (EO) which clock-controls the series/parallel-converter (S/P), that for the recognition of transmission faults, at the end of each transmitted packet a so-called CRC - (cyclic redundancy check) - check polynomial is transmitted to the receiving device (E) in which it is analysed, that the CRC-check polynomial is transmitted at the end of a block in a manner of data bytes in the form of two asynchronous characters and that the generation of the CRC-check polynomial takes place via the data which has not yet been formatted.

2. A bit-serial, asynchronous transmission link as claimed in claim 1, characterised in that the receiver-oscillator (EO) comprises of a feedback logic-linking element, preferably a NAND-element (1), where, for the feedback of the output signal of the logic linking element to one of a plurality of signal inputs thereof, a delay element (2) is connected between the signal output of the logic-linking element and the respective signal input,

that the receiver-oscillator (EO) operates on demand, for which purpose a first signal input of the logic-linking element is preceded by a start flank acquisition element (3), preferably in the form of a D-flip-flop, which is supplied with an incoming data signal pulse as input signal and

that a counter (4) for Z = 10 is provided, the counting input of which is connected to the signal output of the logic-linking element and the counting output of which is connected to the reset terminal of the start flank acquisition element (3).

3. A bit-serial, asynchronous transmission link as claimed in claim 2, <u>characterised in</u> that the delay time of the delay element (2) is adjustable.

4. A bit-serial, asynchronous transmission link as claimed in one of the claims 1 to 3, <u>characterised in</u> that the circuit elements in the transmitting device (S) and the receiving device (E) are constructed at least partially in TTL-circuitry technology.

5. A bit-serial, asynchronous transmission link as claimed in one of the claims 1 to 3, <u>characterised in</u> that the circuit elements of the transmitting device (S) and the receiving device (E) are constructed at least in part in Schottky-TTL-circuitry technology.


**Revendications**

1. Voie de transmission asynchrone, en série par bit, pour débits de données élevés, jusqu'à 40 Mbits/s, en vue d'une transmission de données agencée par paquets entre une source de données et un collecteur de données, de préférence constitués chacun par un calculateur, comprenant un dispositif d'émission (S) et un dispositif de réception (E), avec prévision d'un convertisseur parallèle/série (PS) dans le dispositif d'émission et d'un convertisseur série/parallèle (S/P) dans le dispositif de réception, avec une commande séquentielle (AS) stabilisée par cristal côté émetteur, caractérisée en ce qu'un multiplexeur (M) est prévu dans le dispositif d'émission (S), multiplexeur qui est rythmé par la commande séquentielle (AS) stabilisée par cristal et qui effectue l'édition asynchrone de caractères requise des signaux de données à transmettre, après la conversion parallèle/série, que la commande séquentielle (AS) génère toutes les séquences nécessaires à une transmission par blocs,

que le dispositif de réception (E) comporte, en plus du convertisseur série/parallèle (S/P), un oscillateur de récepteur (EO) qui rythme le convertisseur série/parallèle (S/P),

qu'un polynôme de contrôle dit CRC (Cyclic Redundancy Check pour contrôle cyclique par redondance) est transmis au dispositif de réception (E) à la fin de chaque paquet envoyé, pour la détection d'erreurs de transmission, ce polynôme de contrôle étant analysé dans le dispositif de réception (E),

que le polynôme de contrôle CRC est transmis à la fin d'un bloc comme des bytes de données sous forme de deux caractères asynchrones et que la génération du polynôme de contrôle CRC s'effectue à l'aide des données non encore éditées.

2. Voie selon la revendication 1, caractérisée en ce que l'oscillateur de récepteur (EO) est formé d'un élément logique à rétroaction, de préférence d'un élément NON-ET (1), la rétroaction du signal de sortie de l'élément logique sur l'une de plusieurs entrées de signal de cet élément logique étant assurée par l'interposition d'un élément de retard (2) entre la sortie de signal de l'élément logique et l'entrée concernée,

que l'oscillateur de récepteur (EO) travaille en mode "démarrage selon les besoins", une première entrée de signaux de l'élément logique étant précédée, à cet effet, d'un élément (3) détecteur de flanc de départ, de préférence sous forme d'une bascule de type D, auquel est appliquée, en tant que signal d'entrée, une impulsion entrante de signal de données, et

qu'un compteur (4) est prévu pour une capacité de comptage Z = 10, dont l'entrée de comptage est connectée à la sortie de signaux de l'élément logique et dont la sortie de comptage est connectée à la borne de remise à l'état initial de l'élément (3) détecteur de flanc de départ.

3. Voie selon la revendication 2, caractérisée en ce que le temps de retard de l'élément de retard (2) est réglable.

4. Voie selon une des revendications 1 à 3, caractérisée en ce que les composants du montage dans les dispositifs d'émission (S) et de réception (E) sont réalisés en partie au moins selon la technique des circuits TTL.

5. Voie selon une des revendications 1 à 3, caractérisée en ce que les composants du montage dans les dispositifs d'émission (S) et de réception (E) sont réalisés en partie au moins selon la technique des circuits TTL Schottky.

# FIG 1

# FIG 2

# FIG 3